# EUROPÄISCHE PATENTSCHRIFT

(11) **EP 1 039 968 B1**
(45) Veröffentlichungstag und Bekanntmachung des Hinweises auf die Patenterteilung: **12.11.2003**
(21) Anmeldenummer: 98965752.3
(22) Anmeldetag: 03.12.1998
(51) Int. Cl.: B01J 35/00

(54) **POLYBETAIN-STABILISIERTE PLATIN-NANOPARTIKEL, VERFAHREN ZU IHRER HERSTELLUNG UND VERWENDUNG FÜR ELEKTROKATALYSATOREN IN BRENNSTOFFZELLEN**
POLYBETAINE STABILIZED PLATINUM NANOPARTICLES, METHOD FOR THE PRODUCTION THEREOF AND UTILIZATION FOR FUEL-CELL CATALYSTS
NANOPARTICULES DE PLATINE STABILISEES PAR DE LA POLYBETAINE, LEUR PROCEDE DE PRODUCTION ET LEUR UTILISATION COMME ELECTROCATALYSEURS DANS DES CELLULES ELECTROCHIMIQUES

(30) Priorität: 08.12.1997 DE 19754304
(43) Veröffentlichungstag der Anmeldung: 04.10.2000
(73) Patentinhaber: Celanese Ventures GmbH, 65926 Frankfurt am Main (DE)
(72) Erfinder: BÖNSEL, Harald, D-65529 Waldems (DE); DECKERS, Gregor, D-65929 Frankfurt (DE); FRANK, Georg, D-72074 Tübingen (DE); MILLAUER, Hans, D-81241 München (DE); SOCZKA-GUTH, Thomas, D-65719 Hofheim (DE)
(74) Vertreter: Luderschmidt, Schüler & Partner GbR
(86) Internationale Anmeldenummer: EP9807863
(87) Internationale Veröffentlichungsnummer: WO99029423

(56) Entgegenhaltungen:
- EP-A- 0 672 765
- EP-A- 0 715 889
- EP-A- 0 879 642
- DE-A- 4 443 705
- NAOKI TOSHIMA ET AL: "POLYMER-PROTECTED PALLADIUM-PLATINUM BIMETALLIC CLUSTERS: PREPARATION, CATALYTIC PROPERTIES AND STRUCTURAL CONSIDERATIONS" JOURNAL OF THE CHEMICAL SOCIETY. FARADAY TRANSACTIONS, Bd. 89, Nr. 14, 21. Juli 1993, Seiten 2537-2543, XP000381461

## Beschreibung

Gegenstand der Erfindung sind lösliche Nanopartikel, welche Platin allein oder Platin zusammen mit anderen Metallen der Platingruppe enthalten und durch Schutzkolloide stabilisiert sind, sowie ein Verfahren zu ihrer Herstellung nach dem Sol-Prozeß, dadurch gekennzeichnet, daß die Schutzkolloide ganz oder teilweise aus Polymeren bestehen, welche Seitenketten mit einer Sulfobetain-Gruppe tragen und durch Hydrolyse abbaubar sind. Gegenstand der Erfindung sind ferner aus den vorstehend genannten Nanopartikeln hergestellte Katalysatoren und deren Verwendung für Elektroden von Membranbrennstoffzellen.

Elektrische Antriebe zum Betrieb von Kraftfahrzeugen besitzen aus Gründen knapper werdender Energiereserven und des Umweltschutzes eine herausragende Bedeutung als zukunftsweisende Alternative zu den herkömmlichen Verbrennungskraftmaschinen. Ein erhebliches technisches Problem bereitet dabei noch die Bereitstellung der elektrischen Energie an Bord des Fahrzeugs. Mit wiederaufladbaren Batterien betriebene Fahrzeuge besitzen nur eine geringe Speicherkapazität und gestatten daher nur begrenzte Reichweiten. Dagegen bieten Brennstoffzellen, welche die elektrische Energie an Bord des Fahrzeugs aus einem chemischen Brennstoff erzeugen, wegen der hohen Speicherdichte des chemischen Energieträgers und wegen ihres überlegenen Wirkungsgrades bei der Energieumwandlung vergleichbare Reichweiten wie die derzeitigen Verbrennungsmotoren.

Für Antriebszwecke haben Brennstoffzellen auf der Basis von Platinkatalysatoren und von polymeren Festelektrolyt-Membranen erhebliche Vorteile. Wegen ihrer Bauweise werden Membranbrennstoffzellen als "polymer electrode membrane fuel cells", PEMFC oder auch PEFC bezeichnet.

Obgleich bereits ein hochentwickelter Stand der Technik für Membranbrennstoffzellen existiert, ist für eine wirtschaftliche Anwendung serienmäßiger Elektroantriebe in Kraftfahrzeugen eine weitere Verbesserung der Leistung bei gleichzeitig geringerem Einsatz des teuren Edelmetalls Platin erforderlich.

Das Kernstück einer PEMFC bildet eine gasdichte, für Protonen durchlässige Membran aus einem Kationentauscherpolymer, d. h. aus einem Polymer, an welches negativ geladene, saure Gruppen gebunden sind. Beide Seiten der Membran sind mit einer dünnen Schicht aus einem Gemisch von nanodispersen Platinpartikeln und feinen Teilchen aus elektrisch leitfähigem Kohlenstoff bedeckt. Das Platin wirkt als Katalysator für die beiden elektrochemischen Teilschritte, die Oxidation des Brennstoffes an der Anode und die Reduktion des Sauerstoffs an der Kathode. Die jeweils äußere Abdeckung der Platin/Kohlenstoff-Schicht besteht aus dem Stromkollektor, einem gasdurchlässigen Vlies oder Papier aus elektrisch leitenden Kohlefasern. Zusammen mit der Platin/Kohlenstoff-Schicht bildet der Stromkollektor die Anode bzw. die Kathode der Brennstoffzelle. Die komplette Anordnung aller Komponenten, Anode-Membran-Kathode bezeichnet man als "membrane electrode assembly" (MEA).

Der Antransport der gasförmigen Reaktanden an die Elektroden, d. h. des Brennstoffs an die Anode bzw. des Luftsauerstoffs an die Kathode erfolgt von rückwärts durch den gasdurchlässigen Stromkollektor. Der anodische Stromkollektor dient zur Ableitung der Elektronen, die bei der Oxidation des Brennstoffs frei werden. Der kathodische Stromkollektor dient der Zuführung von Elektronen, die an der Kathode für die Reduktion des Sauerstoffs benötigt werden. Der externe, elektronische Ladungsfluß von der Anode zur Kathode entspricht dem äußeren Stromkreis mit dem dazwischengeschalteten Stromverbraucher.
Der interne, protische Ladungstransport erfolgt in der Weise, daß die an der Anode bei der Oxidation des Brennstoffs gebildeten Protonen mit Hilfe der negativ geladenen Festionen durch die Kationentauschermembran an die Kathode transportiert werden und sich dort mit den Reduktionsprodukten des Sauerstoffs zu Wasser vereinigen.

J. Electrochem. Soc. 143 (1996) L7 beschreibt Platin-Kolloide auf einem hochporösen Kohlenstoff-Träger. Die Platinpartikel werden nach dem Tränkverfahren auf dem Träger erzeugt.

WO 91/19 566 offenbart Legierungen von Edelmetallen mit Kobalt, Chrom und/oder Vanadium auf Kohlenstoff-Trägern, die durch schrittweise Abscheidung der Metalle auf dem Träger und nachfolgendes Calcinieren erzeugt werden.

EP-A-0 106 197 offenbart Katalysatoren bestehend u. a. aus dünnen, flachen Platin-Kristalliten auf einem Graphitträger sowie ein Verfahren zu ihrer Herstellung gekennzeichnet durch eine elektrochemische Abscheidung auf dem Träger.

DE-A-27 19 006 beansprucht Katalysatoren, bei denen die Kationen des katalytisch aktiven Metalls über saure Gruppen des Kohlenstoff-Trägers gebunden werden und der Katalysator ohne vorherige Reduktion in dem zu katalysierenden Prozeß verwendet wird.

Ferner ist bekannt, daß man Heterogenkatalysatoren für chemische und elektrochemische Prozesse, deren aktive Zentren aus einem Metall, insbesondere einem Edelmetall bestehen, auf der Basis eines Sol-Prozesses herstellen kann. Dabei erzeugt man zunächst ein Sol des betreffenden, katalytisch aktiven Metalls oder ggf. mehrerer Metalle in einer separaten Verfahrensstufe und immobilisiert anschließend die gelösten bzw. solubilisierten Nanopartikel auf dem Träger . Der generelle Vorteil des Sol-Verfahrens besteht in der erzielbaren, hohen Dispersität der Partikel, wobei die Untergrenze beispielsweise bei Platin derzeit etwa an 1 Nanometer heranreicht.

Allgemeine Beschreibungen dieser Methode finden sich unter anderem in (a) B. C.

Gates, L. Guczi, H. Knözinger, Metal Clusters in Catalysis, Elsevier, Amsterdam, 1986; (b) J.S. Bradley in Clusters and Colloids, VCH, Weinheim 1994, S. 459-544; (c) B. C. Gates, Chem.. Rev. 1995, 95, 511-522.

Im allgemeinen werden die Sole unter Verwendung eines Stabilisators hergestellt, insbesondere dann, wenn man weiterverarbeitbare Sole mit einer Metallkonzentration von 0,1 % oder höher benötigt. Der Stabilisator umhüllt die Metallpartikel und verhindert das Zusammenballen der Partikel durch elektrostatische oder sterische Abstoßung. Darüber hinaus beeinflußt der Stabilisator in gewissem Grad die Löslichkeit der Partikel.

Als Stabilisatoren kommen sowohl niedermolekulare Verbindungen als auch polymere Verbindungen in Betracht.

Platin-Sole, die niedermolekulare, in Hauptsache tensidische Stabilisatoren enthalten, und ihre Verwendung zur Herstellung von Katalysatoren für Brennstoffzellen sind mehrfach beschrieben worden:
EP-A-0 672 765 offenbart die elektrochemische Herstellung von Platin-Hydrosolen unter Verwendung von kationischen und betainischen Stabilisatoren sowie daraus hergestellte Katalysatoren, die sich unter anderem für Brennstoffzellen eignen sollen. Ein durch Hydrolyse abbaubares Einbettunppolymer, z.B. Polymethacrylsäuremethylester, kann der Lösung nach der Reduktion zugesetzt werden.
DE-A-44 43 701 offenbart platinhaltige Schalenkatalysatoren, die sich für Brennstoffzellen eignen sollen. Dabei bilden die Pt-Partikel eine bis 200 nm in die Tiefe des Trägerkorns reichende Schale. Ferner wird ein Verfahren zu ihrer Herstellung über ein kationisch stabilisiertes Hydrosol beansprucht. Monomere Betaine kommen dabei bevorzugt zum Einsatz.
DE-A-44 43 705 beansprucht die Herstellung von Tensid-stabilisierten Metallkolloiden als Vorläufer für Heterogenkatalysatoren. Monomere Betaine kommen dabei bevorzugt zum Einsatz.

Platin-Sole, die polymere Stabilisatoren enthalten, und ihre Verwendung zur Herstellung von Katalysatoren, unter anderem auch für Brennstoffzellen, sind ebenfalls beschrieben worden. Dabei handelt es sich beispielsweise um Polyacrylsäure, Polyvinylalkohol oder Poly-(N-vinylpyrrolidon). Außer dem Zwecke der Stabilisierung des betreffenden Sols haben die genannten Polymere keine funktionale Bedeutung erlangt.

J. Am. Chem.. Soc. 101 (1979) 7214 beschreibt Platin-Kolloide für die Photolyse von Wasser mit einem hydrodynamischen Durchmesser von 22 bis 106 nm, welche mit Polyvinylalkohol stabilisiert sind.

Chemistry Letters 1981 793 beschreibt polymer-gestützte Platin-Kolloide von etwa 1,5 bis 3,5 nm, welche unter Verwendung von Poly-(N-vinylpyrrolidon) oder Polyvinylalkohol hergestellt wurden.

Science 272 (1996) 1924 beschreibt mit Natrium-Polyacrylat stabilisierte Platinpartikel. Es wurde gefunden, daß die Kantenlänge und die Kristallform der Partikel von der Stabilisatormenge bezogen auf das Platin abhängt.

Femer wurde auch schon gezeigt, daß man auf die Anwesenheit eines Stabilisators verzichten kann, wenn man das Sol in Gegenwart eines Trägers erzeugt. DE-A-25 59 617 offenbart die Herstellung von Katalysatoren, indem man ein Platinsalz in Gegenwart eines Trägers in ein metastabiles Kolloid überführt, welches auf dem Träger niedergeschlagen wird.

US-A- 4 937 220 offenbart ein Verfahren zur Verminderung der Rekristallisation, indem man eine Dispersion aus unterschiedlichen Kristallgrößen und -formen auf den Kohlenstoff-Träger aufbringt.

DE-A-2848138 lehrt ein Verfahren zur Verminderung der Rekristallisation, indem poröser Kohlenstoff auf und um die auf den Kohlenstoff-Teilchen befindlichen Platinkristallite abgeschieden wird.

US-A-4 610 938 offenbart Elektroden für Brennstoffzellen, an deren katalytisch wirksame Oberfläche eine Schicht eines fluorierten, saure Gruppen tragenden Polymers angrenzt.

US-A-4 876 115 beschreibt die Beschichtung von Kohlenstoff-Trägern, welche mit Platin-Partikeln von 2 bis 5 Nanometern Durchmesser in einer Menge von etwa 0,35 mg/cm² Pt beladen sind, mit einem perfluorierten Kationentauscherharz zur Erhöhung der Protonenleitfähigkeit.

Dem verlustarmen Verlauf von elektrochemischen Prozessen und Stofftransportprozessen, welche in beiden Elektrodenschichten einer Membranbrennstoffzelle existieren, hat man bisher in der Praxis nur teilweise Rechnung tragen können. Ein erhebliche Teil des eingesetzten Platins ist infolge unzureichender Kontaktierung mit der elektronen- und/oder der protonenleitenden Phase nicht oder nur beschränkt arbeitsfähig, was letzten Endes zu einer verminderten Leistung der Zelle führt und in herkömmlichen Systemen durch sehr hohe Platinbeladungen kompensiert wird. Es hat sich insbesondere gezeigt, daß man mehr Platin benötigt als zur Erzielung einer bestimmten elektrischen Leistung an sich erforderlich wäre. In der Praxis beträgt der Platineinsatz etwa 0,5 bis 4 mg/cm² Membranfläche. Das entspricht bisher mehreren 100 g Platin für ein verkehrstüchtiges Fahrzeug mit einer Motorleistung von 40-50 kW. In wissenschaftlichen Veröffentlichungen und Patenten werden zwar bereits zum Teil erheblich geringere Platin-Einsatzmengen in der Größenordnung von 0,1 bis 0,2 mg/cm² genannt. Unter den realistischen Bedingungen des Straßenverkehrs eingesetzte Brennstoffzellen erfordern aber nach wie vor einen deutlich höheren Platineinsatz.

Ein entscheidender Grund für den erhöhten Platinbedarf beruht auf dem bisher vorwiegend angewandten Herstellverfahren für das Platin/Kohlenstoff-Gemisch. Bei diesem Verfahren wird die Lösung einer reduzierbaren oder fällbaren Platinverbindung durch Tränken oder Sprühen auf den Kohlenstoff-Träger aufgebracht. Anschließend wird die Platinverbindung durch Fällung und/oder chemische Reduktion in feindisperse Platin- oder Platinoxidpartikel überführt, wobei es häufig zur Bildung von größeren Teilchen von bis zu einigen 10 bis 100 nm kommt. Dadurch tritt eine Abschwächung der katalytischen Aktivität infolge der Verringerung der spezifischen Platinoberfläche ein.

Es ist ferner bekannt, daß ein Platinkatalysator auf einem Kohlenstoff-Träger unter den üblichen Betriebsbedingungen, d. h. bei erhöhter Temperatur an Oberfläche verliert.

Die beschriebenen Zusammenhänge zwischen der Partikelgröße der Metallzentren und ihrer katalytischen Aktivität einerseits und der festgestellten Tendenz zur Teilchenvergrößerung durch Agglomeration andererseits erfordern die exakte Kontrolle über Größe der Partikel und über die Mikrostruktur der sie umgebenden Matrix. Der benötigte Grad dieser Eigenschaften konnte bisher mit konventionellen Präparationstechniken nicht erzielt werden.

Auf dem Hintergrund des Standes der Technik bestand die Aufgabe darin, erstens eine hohe Dispersion der katalytisch wirksamen Platinzentren zu erzielen, zweitens einen ungehinderten Transport von Edukten, Produkten sowie Protonen und Elektronen zu gewährleisten und drittens die Rekristallisation der Platinpartikel zu größeren Teilchen auf dem Kohlenstoff-Träger herabzusetzen.

Überraschenderweise wurde gefunden, daß man durch den Einsatz von polymeren Betainen Sole mit besonders kleinen Partikeln mit einem Durchmesser von typischerweise 1 Nanometer erhält. Dadurch wird eine sehr hohe Dispersität und damit ein sparsamer Einsatz der teuren Edelmetalle erzielt.

Gegenstand der Erfindung sind Nanopartikel, die Platin allein oder Platin und andere Metalle der Platingruppe enthalten, dadurch gekennzeichnet, daß sie in ein durch Hydrolyse abbaubares, polymere Betaine enthaltendes Schutzkolioid eingebettet sind, wobei das polymere Betain aus einer im wesentlichen unverzweigten Polymethylen-Hauptkette und verschiedenartigen, Betain-Gruppen tragenden Seitenketten aufgebaut sind, die Nanopartikel einen Durchmesser von 0,5 bis 3 nm aufweisen und die Nanopartikel kein Palladium enthalten.

Gegenstand der Erfindung ist weiterhin ein Verfahren zur Herstellung von Nanopartikeln, enthaltend Platin allein oder Platin und andere Metalle der Platingruppe, und eingebettet in ein durch Hydrolyse abbaubares, polymere Betaine enthaltendes Schutzkolloid, durch Umsetzung einer Platinverbindung allein oder einer Platinverbindung zusammen mit einer oder mehreren Verbindungen von Metallen ausgewählt aus der Gruppe Rhodium, Ruthenium und Iridium, mit einem Reduktionsmittel in Wasser oder einem Lösemittel, dadurch gekennzeichnet, daß man die Reduktion in Gegenwart eines polymeren Betains durchführt, oder das polymere Betain nach dem Reduktionsschritt, aber vor dem Einsetzen der Zusammenballung, zu dem Sol gibt, wobei das polymere Betain durch Hydrolyse abbaubar ist, und ggf. anschließend das stabilisierte Sol durch Umfällen reinigt und/oder durch Eindampfen aufkonzentriert.

Ein weiterer Gegenstand der Erfindung sind Katalysatoren für Brennstoffzellen, dadurch erhältlich, daß man einen feinpulvrigen, leitfähigen Träger aus feindispersem Kohlenstoff, Ruß oder Graphit mit einem Sol der vorstehend genannten Nanopartikel in Kontakt bringt, den gebildeten Katalysator durch Abfiltrieren oder Abzentrifugieren von der flüssigen Phase abtrennt und gegebenenfalls das Schutzkolloid anschließend durch Behandlung mit einer Base von dem Katalysator ganz oder teilweise entfernt.

Die aus der Erfindung hervorgehenden Nanopartikel bzw. die daraus gewonnenen Katalysatoren sind prinzipiell für die Anode und die Kathode einer Membranbrennstoffzelle geeignet. Eine unterschiedliche Gestaltung von Nanopartikeln bzw. Katalysatoren für die Anode bzw. die Kathode im Rahmen der Erfindung ist aber nicht ausgeschlossen, sondern kann im Einzelfall zweckmäßig sein.

Die Sole der Nanopartikel werden, vorzugsweise nach vorangegangener Reinigung und Aufkonzentration, auf den Träger aufgebracht, wobei die Stabilisatorhülle im wesentlichen erhalten bleibt.

Eine bevorzugte Ausführungsform der Erfindung besteht darin, daß man nach der Immobilisierung die aus einem polymeren Betain bestehende Umhüllung von den katalytisch wirksamen Zentren ganz oder teilweise entfernt. Durch diese Maßnahme wird der Transport der Elektronen und/oder Protonen von bzw. zu den Zentren unterstützt. Die dafür erfindungsgemäß einzusetzenden polymeren Betaine bestehen zum Beispiel aus Derivaten der Polyacrylsäure, bei welchen die Betaingruppen tragenden Seitenketten über Carbonsäureestergruppe und/oder eine Carbonsäureamidgruppe mit der Polymerhauptkette verknüpft sind. Der Abbau erfolgt durch Hydrolyse der Carbonsäureestergruppe bzw. Carbonsäureamidgruppe. Die Spaltung kann durch Behandlung des Katalysators mit einer Base beispielsweise mit einem Alkalihydroxid oder Ammoniak vorgenommen werden.

Die erfindungsgemäß erhältlichen, löslichen Nanopartikel sind Teilchen mit einem Durchmesser von etwa 0,5 bis 3 Nanometer, vorzugsweise von etwa 1 bis 2 Nanometer bezogen auf den Metallkern. Die Partikel sind in Wasser oder einem organischen Lösemittel löslich, wobei "löslich" auch "solubilisierbar", d. h. Sole bildend, bedeutet.

Bei der erfindungsgemäßen Herstellung von Nanopartikeln setzt man als Ausgangsstoffe die zur Verwendung kommenden Metalle in Form von löslichen Verbindungen, insbesondere wasserlöslichen Verbindungen ein, wie beispielsweise Hexachloroplatin(IV)-säure Hydrat, Hexachloroiridium(IV)-säure Hydrat, lridium(III)-acetylacetonat, Ruthenium(III)-acetylacetonat, Ruthenium(III)-nitrat, Rhodium(III)-chlorid Hydrat. Die Metallverbindungen werden in Konzentration von etwa 0,1 bis 100 g pro Liter, vorzugsweise von 1 bis 50 g pro Liter bezogen auf das Lösemittel eingesetzt.

Erfindungsgemäß eingesetzte polymere Betaine sind aus einer im wesentlichen unverzweigten Polymethylen-Hauptkette und verschiedenartigen, Betain-Gruppen tragenden Seitenketten aufgebaut.

Zum Beispiel bestehen die Seitenketten aus einem Alkylenrest von etwa 2 bis 12 Kohlenstoff-Atomen, vorzugsweise 2 bis 4 Kohlenstoff-Atomen und tragen endständig eine Betain-Gruppe. Die Verknüpfung der Seitenkette mit der Hauptkette erfolgt über eine Carbonsäureester-Gruppe oder über eine CarbonsäureamidGruppe. Bei Polymeren der vorstehend beschriebenen Art läßt sich auf einfache Weise, zum Beispiel durch Umsetzung mit einer Base, die Seitenkette abspalten.

Die Seitenkette kann auch von einem N-haltigen, heterocyclischen Ringsystem, beispielsweise einem Pyridinring gebildet werden, wobei das Stickstoffatom der Betain-Gruppe dem Ringsystem angehört und die Verknüpfung mit der Hauptkette über Kohlenstoff- oder ggf. weitere Stickstoffatome des Ringsystems erfolgt.

Die Betain-Gruppe kann aus einem Carbobetain, -N⁺R¹R²-(-CH₂-)ₙ-CO₂⁻, einem Phosphobetain, -N⁺R₁R₂-(-CH₂-)ₙ-PO₃⁻ oder vorzugsweise aus einem Sulfobetain -N⁺R₁R₂-(-CH₂-)ₙ-SO₃⁻ bestehen, wobei R¹ und R² gleiche oder verschiedene Alkylreste von 1 bis 6 Kohlenstoff-Atomen und n 1, 2 oder 3 bedeuten.

Geeignete Polymere sind beispielsweise Poly-[N,N-Dimethyl-N-methacryloxyethyl-N-(3-sulfopropyl)-ammonium betain] gemäß Formel 1, 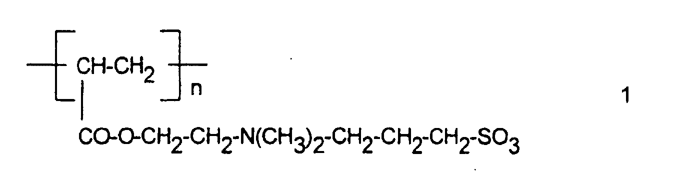 Poly-[N,N-Dimethyl-N-methacrylamidopropyl-N-(3-sulfopropyl)-ammonium betain] gemäß Formel 2, 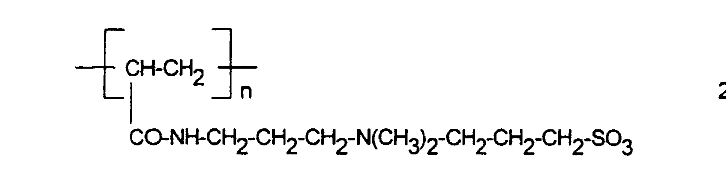 Poly-[1-(3'-Sulfopropyl)-2-vinylpyridinium betain] gemäß Formel 3

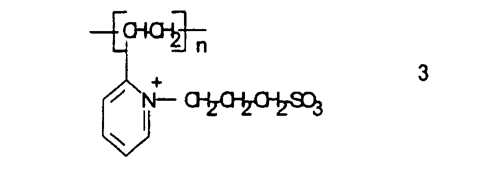

Die vorstehend beschriebenen Polymere werden durch radikalische Polymerisation aus den entsprechenden Monomeren, die kommerziell verfügbar sind, hergestellt. Die Polybetaine weisen Polymerisationsgraden von etwa 50 bis 10000, vorzugsweise von 100 bis 1000 auf.

Man kann auch Copolymere, die aus verschiedenen Monomeren der vorstehend beschriebenen Kategorien aufgebaut sind, einsetzen.

Ferner können Copolymere eingesetzt werden, die aus den vorstehend beschriebenen Monomeren mit Betain-Gruppen sowie weiteren Monomeren wie beispielsweise Acrylsäure, Acrylsäureester, Acrylsäureamide, Carbonsäurevinylester, Vinyl-alkylether, N-Vinylpyridin, N-Vinylpyrrolidon, N-Vinylcarbonsäureamide aufgebaut sind.

Für das erfindungsgemäße Verfahren werden die Polybetaine in Gewichtsmengen von 5 bis 2000 %, vorzugsweise von 20 bis 400 % bezogen auf das Metall bzw. die Metalle eingesetzt.

Das erfindungsgemäße Verfahren wird in Wasser oder in einem Gemisch aus Wasser und einem (oder mehreren), mit Wasser mischbaren organischen Lösemittel(n) oder unter Ausschluß von Wasser in einem organischen Lösemittel durchgeführt.

Als Lösemittel kommen zum Beispiel in Frage Methanol, Ethanol, Ethylenglykol, Tetrahydrofuran, Dimethoxyethan, Aceton, N-Methylpyrrolidon, Dimethylformamid oder Dimethylacetamid. Bevorzugt ist die Herstellung von Solen in Wasser (Hydrosolen) oder in Wasser unter Zusatz von 1 bis 50 Gewichts-%, vorzugsweise von 5 bis 25 % eines organischen Lösemittels.

Als Reduktionsmittel kommen alle üblichen Reduktionsmittel in Betracht, die ein ausreichend negatives Reduktionspotential aufweisen wie zum Beispiel Wasserstoff, Natriumborhydrid, Ethanol, Ethylenglykol, Hydroxymethansulfinsäure Natriumsalz. Als bevorzugtes Reduktionsmittel wird Hydroxymethansulfinsäure Natriumsalz (Rongalit®) verwendet. Das Reduktionsmittel wird im allgemeinen in stöchiometrischen Mengen bezogen auf die Metallverbindung(en), vorzugsweise aber in einem gewissen Überschuß eingesetzt. Der Überschuß kann beispielsweise 10 bis 100 % betragen.

Die Herstellung der Sole erfolgt bei Temperaturen zwischen 0 und 200°C, vorzugsweise zwischen 20 und 100°C. Die Komponenten können im allgemeinen in beliebiger Reihenfolge zugegeben werden. Dabei ist es zweckmäßig, die Durchmischung durch Rühren zu unterstützen. Bei der bevorzugten Durchführung wird das Reduktionsmittel als Letztes zugegeben. Falls man das polymere Betain erst nach der Reduktion zusetzt, hat die Zugabe vor dem Einsetzen der Zusammenballung zu erfolgen.

Die in den erfindungsgemäßen Solen enthaltenen Platin-Polybetain-Komplexe sind neue Verbindungen von relativ einheitlicher Zusammensetzung. Die transmissionselektronenmikroskopische Untersuchung (TEM) der Partikel ergab eine sehr enge Größenverteilung. Typischerweise 90 % der Partikel weichen weniger als 20 % vom Mittelwert des Durchmessers ab. Der Durchmesser des Metallkerns hängt zu einem gewissem Grad von der Art und der Menge des eingesetzten Stabilisators ab. Er beträgt in der Regel unter 3 Nanometer, meistens unter 2 Nanometer. In den meisten Fällen liegt der Durchmesser des Metallkerns bei etwa 1 Nanometer.

Für die Weiterverarbeitung der Sole zu Katalysatoren, d. h. zur Herstellung des Platin/Ruß-Gemisches sind im allgemeinen Metallkonzentrationen von mindestens 10 g/Liter erwünscht. Die erfindungsgemäß erhaltenen Sole können ggf. durch schonendes Abdestillieren von Wasser und/oder des Lösemittels eingeengt werden. Falls es erforderlich ist, können die erfindungsgemäß erhaltenen Sole in an sich bekannter Weise durch Umfällen gereinigt und ggf. gleichzeitig aufkonzentriert werden. Die Fällung eines kolloidal gelösten Platin-Kationentauscherpolymer Komplexes kann durch Zugabe von Aceton oder Isopropanol erfolgen. Die erhaltenen Platin-Kationentauscherpolymer-Gele sind in wieder in Wasser löslich. Die dadurch erzielbaren Metallkonzentrationen liegen zwischen 50 und 100 g/Liter.

Für die Herstellung von Katalysatoren werden die wie vorstehend beschrieben hergestellten wäßrigen Sole mit einem feinpulvrigen, leitfähigen Kohlenstoff-Träger in Kontakt gebracht und anschließend die flüssige Phase abgetrennt. Dabei erfolgt eine Immobilisierung des Platin-Kationentauscherpolymer Komplexes auf dem Trägerteilchen. Es wurde gefunden, daß die erfindungsgemäßen Platin-Kationentauscherpolymer Komplexe sich dabei bevorzugt auf der Oberfläche oder in oberflächennahen Bereichen des Trägers ablagern und eine gute Haftung auf dem Träger aufweisen.

Der Träger besteht aus feindispersem Kohlenstoff, Ruß oder Graphit. Bevorzugt werden spezielle, elektrisch leitfähige Kohlenstoffe (Carbon Black) verwendet, die als kommerziell verfügbar sind, beispielsweise ®Vulcan XC 72R.

Die einzusetzenden Kohlenstoff-Träger können vor oder nach der Beladung mit den erfindungsgemäßen Pt-Nanopartikeln zusätzlich mit Materialien beaufschlagt werden, beispielsweise mit protonenleitenden Polymeren. Diese Vorgehensweise ist dem Grundsatz nach beschrieben in US-A-4 876 115.

Eine Form der Durchführung der Beladung des Kohlenstoff-Trägers besteht darin, daß man zu einer Suspension des Trägers in Wasser oder einem Wasser/Alkohol-Gemisch das Sol unter Durchmischung einträgt, die Suspension nachrührt und das Platin/Kohlenstoff-Gemisch durch Filtrieren oder Zentrifugieren isoliert.

### Beispiel 1

In einem 2L-Erlenmeyerkolben wurden 1000 ml entsalztes Wasser vorgelegt. Dazu gab man 2,50 g (ca. 5 mMol) Hexachloroplatinsäure Hydrat (Platingehalt ca.40 %) und fügte tropfenweise 5 %ige Ammoniaklösung hinzu bis ein pH-Wert von 7 erreicht war. Dann fügte man bei 95°C unter Rühren 1,00 g Poly-[N,N-Dimethyl-N-methacryloxyethyl-N- (3-sulfopropyl)- ammonium betain] gemäß Formel 1 und anschließend eine Lösung von 2,50 g (21 mMol) Hydroxymethansulfinsäure, Natriumsalz Dihydrat (Rongalit®) in 20 ml entsalztem Wasser hinzu. Man ließ auf Raumtemperatur abkühlen und 8 h stehen, versetzte das Hydrosol mit 1000 ml Aceton, rührte 5 min durch und ließ den ausgefallenen Niederschlag 15 h absitzen. Nach Abdekantieren der Hauptmenge des Überstandes zentrifugierte man den Rest 15 min bei 7000 Upm. Der Zentrifugenrückstand wurde restlos in Wasser zu 20,0 g gelöst, wobei ein dunkel-rotbraunes Sol entstand.

### Beispiel 2

In einem 2L-Erlenmeyerkolben wurden 1000 ml entsalztes Wasser vorgelegt. Dazu gab man 2,50 g (ca. 5 mMol) Hexachloroplatinsäure Hydrat (Platingehalt ca.40 %) und fügte tropfenweise 5 %ige Ammoniaklösung hinzu bis ein pH-Wert von 7 erreicht war. Dann fügte man bei 95°C unter Rühren 1,00 g Poly-[N,N-Dimethyl-N-methacrylamidopropyl-N-(3-sulfopropyl)- ammonium betain] gemäß Formel 2 hinzu und verfuhr anschließend weiter wie in Beispiel 1 beschrieben.
Nach Aufarbeitung erhält man 20,0 g eines dunkel-rotbraunen Sols .

### Beispiel 3

In einem 2L-Erlenmeyerkolben wurden 1000 ml entsalztes Wasser vorgelegt. Dazu gab man 2,50 g (ca. 5 mMol) Hexachloroplatinsäure Hydrat (Platingehalt ca.40 %) und fügte tropfenweise 5 %ige Ammoniaklösung hinzu bis ein pH-Wert von 7 erreicht war. Dann fügte man bei 95°C unter Rühren 1,00 g Poly-[1-(3'-Sulfopropyl)-2-vinylpyridinium betain] gemäß Formel 3 hinzu und verfuhr anschließend weiter wie in Beispiel 1 beschrieben.

### Beispiel 4

In einem mit 5 Porzellankugeln (Durchmesser 10 mm) bestückten 100ml-Rundkoben wurden 2,00 g ®Vulcan XC 72R (Hersteller: Cabot B.V., Rozenburg, Niederlande), 20 ml Wasser und 5 ml Methanol vorgelegt und 4 h durch Drehen bei 100 UpM am Rotationsverdampfer vermischt. Zu der erhaltenen, gleichmäßigen Suspension pumpte man im Verlauf von 0,5 h bei 20-25°C unter fortgesetztem Drehen 8,0 g (ca. 0,4 g Platin; Stabilisator: Poly-[N,N-Dimethyl-N-methacryloxyethyl-N- (3-sulfopropyl)-ammonium betain]) Sol-Konzentrat zu, welches gemäß Beispiel 1 hergestellt worden war und mit 5 ml Wasser verdünnt wurde. Anschließend wurde die Suspension noch 3 h gedreht. Die beschichtete Kohle wurde zentrifugiert und im Vakuumexsiccator über konz. Schwefelsäure getrocknet. Die Auswaage betrug 2,47 g.
Die Analyse des erhaltenen Katalysators ergab 11 % Platin (ICP-OES).
Die TEM-Analyse des Katalysators (Transmissionselektronenmikroskop: Philips CM 30; die Teilchen wurden auf ein mit Kohlenstoff befilmtes Kupfernetz aufgebracht) ergab einen feinen Belag von Platinpartikeln, deren Durchmesser maximal etwa 1 Nanometer betrug.

### Beispiel 5

Es wurde eine Immobilisierung analog Beispiel 4 durchgeführt. Als Trägermaterial wurde 2,00 g ®Vulcan XC 72R (Hersteller: Cabot B.V., Rozenburg, Niederlande) eingesetzt, das zuvor mit einer Lösung von sulfoniertem Polyetheretherketon (PEEK), Molekulargewicht Mₙ ca. 80 000, Sulfonierungsgrad 50,7 %;) behandelt worden war. Es wurden 6,6 g (ca. 0,33 g Platin, Stabilisator: Poly-[N,N-Dimethyl-N-methacryloxyethyl-N-(3-sulfopropyl)- ammonium betain]) Sol-Konzentrat benutzt, welches gemäß Beispiel 1 hergestellt worden war.
Die Auswaage betrug 1,9 g.

## Patentansprüche

1. Nanopartikel, die Platin allein oder Platin und andere Metalle der Platingruppe enthalten, **dadurch gekennzeichnet, daß** sie in ein durch Hydrolyse abbaubares, polymere Betaine enthaltendes Schutzkolloid eingebettet sind, wobei das polymere Betain aus einer im wesentlichen unverzweigten Polymethylen-Hauptkette und verschiedenartigen, Betain-Gruppen tragenden Seitenketten aufgebaut sind, die Nanopartikel einen Durchmesser von 0,5 bis 3 nm aufweisen und die Nanopartikel kein Palladium enthalten.

2. Lösliche Nanopartikel nach Anspruch 1, **dadurch gekennzeichnet, daß** sie einen Durchmesser von 1 bis 2 nm aufweisen.

3. Lösliche Nanopartikel nach Anspruch 1 und/oder 2, **dadurch gekennzeichnet, daß** sie mindestens ein Polymer mit Betain-Gruppen enthalten, das eine Seitenkette trägt, die aus einem Alkylenrest mit etwa 2 bis 12, vorzugsweise 2 bis 4 Kohlenstoffatomen besteht.

4. Lösliche Nanopartikel nach einem oder mehreren der Ansprüche 1 bis 3, **dadurch gekennzeichnet, daß** es sich bei dem Betain um ein Carbobetain der Formel -N⁺R¹ R²-(-CH₂-)ₙ-CO₂⁻, einem Phosphobetain der Formel -N⁺R¹R²-(-CH₂-)ₙ-PO₃⁻ oder, vorzugsweise, um ein Sulfobetain der Formel -N⁺R¹R²-(-CH₂-)ₙ-SO₃⁻ handelt, wobei R¹ und R² unabhängig voneinander gleich oder verschieden sein können, und Alkylreste von 1 bis 6 Kohlenstoffatome bedeuten, und n 1, 2 oder 3 bedeutet.

5. Lösliche Nanopartikel nach einem oder mehreren der Ansprüche 1 bis 4, **dadurch gekennzeichnet, daß** die Schutzkolloide Verbindungen der Formeln 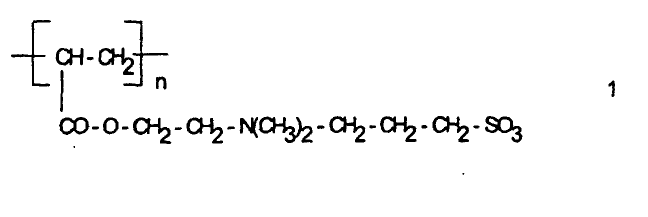 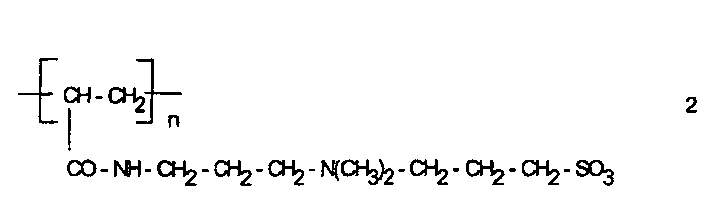 oder 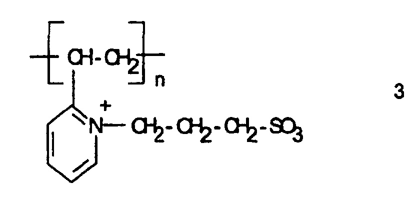 sind, worin n 1, 2 oder 3 bedeutet.

6. Lösliche Nanopartikel nach einem oder mehreren der Ansprüche 1 bis 5, **dadurch gekennzeichnet, daß** sie mindestens ein Polymer mit Betain-Gruppen enthalten, das einen Polymerisationsgrad von 50 bis 10000, vorzugsweise von 100 bis 1000 aufweist.

7. Lösliche Nanopartikel nach einem oder mehreren der Ansprüche 1 bis 6, **dadurch gekennzeichnet, daß** sie ein Polymer enthalten, das neben Monomeren, die Betain-Gruppen enthalten, auch Monomere ausgewählt aus der Gruppe Acrylsäure, Acrylsäureester, Acrylsäureamide, Carbonsäurevinylester, Vinyl-alkylether, N-Vinylpyridin, N-Vinylpyrrolidon, N-Vinylcarbonsäureamide enthält.

8. Verfahren zur Herstellung von löslichen Nanopartikeln nach einem oder mehreren der Ansprüche 1 bis 7 durch Umsetzung einer Platinverbindung allein oder einer Platinverbindung zusammen mit einer oder mehreren Verbindungen von Metallen ausgewählt aus der Gruppe Rhodium, Ruthenium und Iridium, mit einem Reduktionsmittel in Wasser oder einem Lösemittel, **dadurch gekennzeichnet, daß** man die Reduktion in Gegenwart eines polymeren Betains durchführt, oder das polymere Betain nach dem Reduktionsschritt, aber vor dem Einsetzen der Zusammenballung, zu dem Sol gibt, wobei das polymere Betain durch Hydrolyse abbaubar ist, und die Herstellung der Sole bei einer Temperatur zwischen 0 und 200°C erfolgt.

9. Verfahren nach Anspruch 8, **dadurch gekennzeichnet, daß** das Sol durch Umfällen gereinigt und/oder durch Eindampfen aufkonzentriert wird.

10. Verfahren nach Anspruch 8 und/oder 9, **dadurch gekennzeichnet, daß** die Ausgangsstoffe für die Herstellung der löslichen Nanopartikel lösliche Verbindungen, insbesondere wasserlösliche Salze, speziell Hexachloroplatin(IV)-säure Hydrat, Hexachloroiridium(IV)-säure Hydrat, lridium(III)-acetylacetonat, Ruthenium(III)-acetylacetonat, Ruthenium(III)-nitrat, Rhodium(III)-chlorid Hydrat sind.

11. Verfahren nach einem oder mehreren der Ansprüche 8 bis 10, **dadurch gekennzeichnet, daß** die Ausgangsstoffe für die Herstellung der löslichen Nanopartikel in Konzentrationen von etwa 0,1 bis 100 g pro Liter, vorzugsweise von 1 bis 50 g pro Liter bezogen auf das Lösemittel eingesetzt werden.

12. Verfahren nach einem oder mehreren der Ansprüche 8 bis 11, **dadurch gekennzeichnet, daß** als Reduktionsmittel Wasserstoff, Natriumborhydrid, Ethanol, Ethylenglykol oder, bevorzugt, Hydroxymethansulfinsäure-Natriumsalz verwendet werden.

13. Verfahren nach einem oder mehreren der Ansprüche 8 bis 12, **dadurch gekennzeichnet, daß** das Reduktionsmittel in stöchiometrischen Mengen bezogen auf die Metallverbindung(en), oder, vorzugsweise, im Überschuß von 10 bis 100 % verwendet wird.

14. Verfahren nach einem oder mehreren der Ansprüche 8 bis 13, **dadurch gekennzeichnet, daß** das Lösemittel Methanol, Ethanol, Ethylenglykol, N-Methylpyrrolidon, Dimethylformamid, Dimethylacetamid oder Tetrahydrofuran, oder eine Mischung dieser Stoffe mit Wasser ist.

15. Verfahren nach einem oder mehreren der Ansprüche 8 bis 14, **dadurch gekennzeichnet, daß** es bei Temperaturen von 20 bis 100°C durchgeführt wird.

16. Katalysatoren für Membranbrennstoffzellen, dadurch erhältlich, daß man einen feinpulvrigen, leitfähigen Träger aus feindispersem Kohlenstoff, Ruß oder Graphit mit einem Sol der Nanopartikel nach einem oder mehreren der Ansprüche 1 bis 7 in Kontakt bringt.

17. Katalysatoren nach Anspruch 16, **dadurch gekennzeichnet, daß** sie mit protonenleitenden Polymeren beaufschlagt sind.

18. Verwendung von Katalysatoren nach Anspruch 16 und/oder 17 in Membranbrennstoffzellen.

## Claims

1. Nanosize particles which comprise platinum alone or platinum and other metals of the platinum group and are embedded in a protective colloid which comprises polymeric betaines and can be degraded by hydrolysis, where the polymeric betaine is made up of an essentially unbranched polymethylene main chain and various side chains bearing betaine groups, the nanosize particles have a diameter of from 0.5 to 3 nm and do not any palladium.

2. Soluble nanosize particles as claimed in claim 1 which have a diameter of from 1 to 2 nm.

3. Soluble nanosize particles as claimed in claim 1 and/or 2 which comprise at least one polymer which contains betaine groups and bears a side chain comprising an alkylene radical having from about 2 to 12, preferably from 2 to 4, carbon atoms.

4. Soluble nanosize particles as claimed in one of more of claims 1 to 3, wherein the betaine is a carbobetaine of the formula -N⁺R¹R²-(-CH₂-)ₙ-CO₂-, a phosphobetaine of the formula -N⁺R¹R²-(-CH₂-)ₙ-PO₃- or, preferably, a sulfobetaine of the formula -N⁺R¹R²-(-CH₂-)ₙ-SO₃-, where R¹ and R² may, independently of one another, be identical or different and are alkyl radicals having from 1 to 6 carbon atoms and n is 1, 2 or 3.

5. Soluble nanosize particles as claimed in one of more of claims 1 to 4, wherein the protective colloids are compounds of the formula 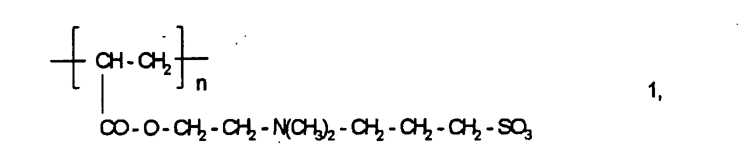 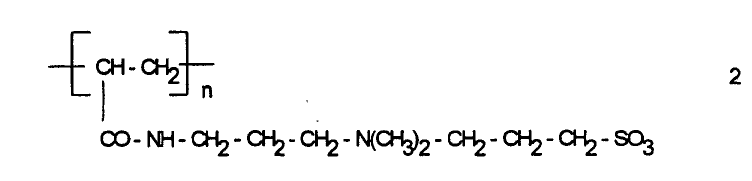 or 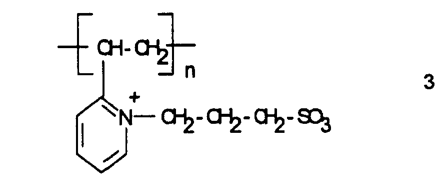 where n is 1, 2 or 3.

6. Soluble nanosize particles as claimed in one or more of claims 1 to 5, which comprise at least one polymer which contains betaine groups and has a degree of polymerization of from 50 to 10,000, preferably from 100 to 1000.

7. Soluble nanosize particles as claimed in one of more of claims 1 to 6, which comprise a polymer comprising both monomers containing betaine groups and also monomers selected from the group consisting of acrylic acid, acrylic esters, acrylamides, vinyl carboxylates, vinyl alkyl ethers, N-vinylpyridine, N-vinylpyrrolidone and N-vinylcarboxamides.

8. A process for preparing soluble nanosize particles as claimed in one or more of claims 1 to 7 by reacting a platinum compound alone or a platinum compound together with one or more compounds of metals selected from the group consisting of rhodium, ruthenium and iridium with a reducing agent in water or a solvent, wherein the reduction is carried out in the presence of a polymeric betaine or the polymeric betaine is added to the sol after the reduction step but before agglomeration commences, where the polymeric betaine can be degraded by hydrolysis and the preparation of the sols is carried out at a temperature of from 0 to 200°C.

9. The process as claimed in claim 8, wherein the sol is purified by reprecipitation and/or concentrated by evaporation.

10. The process as claimed in claim 8 and/or 9, wherein the starting materials for preparing the soluble nanosize particles are soluble compounds, in particular water-soluble salts, especially hexachloroplatinic(IV) acid hydrate, hexachloroiridic(IV) acid hydrate, iridium(III) acetylacetonate, ruthenium(III) acetylacetonate, ruthenium(III) nitrate, rhodium(III) chloride hydrate.

11. The process as claimed in one or more of claims 8 to 10, wherein the starting materials for preparing the soluble nanosize particles are used in concentrations of from about 0.1 to 100 g per liter, preferably from 1 to 50 g per liter, based on the solvent.

12. The process as claimed in one or more of claims 8 to 11, wherein the reducing agent used is hydrogen, sodium borohydride, ethanol, ethylene glycol or, preferably, hydroxymethanesulfinic acid sodium salt.

13. The process as claimed in one or more of claims 8 to 12, wherein the reducing agent is used in a stoichiometric amount based on the metal compound(s) or, preferably, in an excess of from 10 to 100%.

14. The process as claimed in one or more of claims 8 to 13, wherein the solvent is methanol, ethanol, ethylene glycol, N-methylpyrrolidone, dimethylformamide, dimethylacetamide or tetrahydrofuran, or a mixture of these substances with water.

15. The process as claimed in one or more of claims 8 to 14 carried out at temperatures of from 20 to 100°C.

16. A catalyst for membrane fuel cells, obtainable by bringing a finely pulverulent, conductive support comprising finely divided carbon, carbon black or graphite into contact with a sol of nanosize particles as claimed in one or more of claims 1 to 7.

17. A catalyst as claimed in claim 16 which has been treated with proton-conducting polymers.

18. The use of a catalyst as claimed in claim 16 and/or 17 in membrane fuel cells.

## Revendications

1. Nanoparticules, qui renferment du platine seul ou du platine et d'autres métaux du groupe de platine, **caractérisées en ce qu'**elles sont noyées dans un colloïde protecteur dégradable par hydrolyse, comprenant des bétaines polymères, la bétaïne polymère étant constituée par une chaîne principale de polyméthylène, essentiellement non ramifiée, et par des chaînes latérales diverses, portant des groupes bétaïnes, les nanoparticules présentent un diamètre de 0,5 à 3 nm et les nanoparticules ne renferment pas de palladium.

2. Nanoparticules solubles selon la revendication 1, **caractérisées en ce qu'**elles présentent un diamètre de 1 à 2 nm.

3. Nanoparticules solubles selon la revendication 1 et/ou 2, **caractérisées en ce qu'**elles renferment un polymère avec des groupes bétaines, qui porte une chaîne latérale, qui est constituée par un reste alkylène présentant environ de 2 à 12, de préférence 2 à 4 atomes de carbone.

4. Nanoparticules solubles selon une ou plusieurs des revendications 1 à 3, **caractérisées en ce qu'**il s'agit pour la bétaine d'une carbobétaine de formule -N⁺R¹R²-(CH₂-)ₙ-CO₂-, une phosphobétaïne de formule -N⁺R¹R²-(CH₂-)ₙ-PO₃- ou, de préférence, d'une sulfobétaine de formule -N⁺R¹R²-(CH₂-)ₙ-SO₃-, R¹ et R² pouvant être, indépendamment l'un de l'autre, identiques ou différents, et représentent des restes alkyles comprenant 1 à 6 atomes de carbone, et n vaut 1, 2 ou 3.

5. Nanoparticules solubles selon une ou plusieurs des revendications 1 à 4, **caractérisées en ce que** les colloïdes protecteurs sont des composés de formules 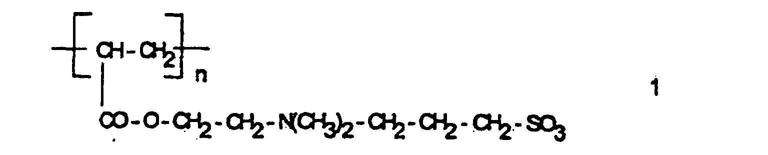 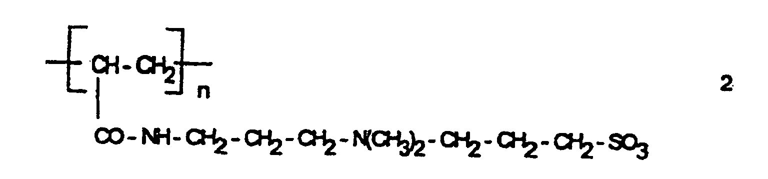 ou 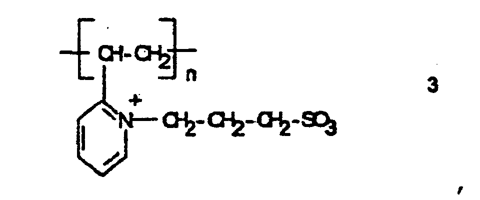 n vaut 1, 2 ou 3.

6. Nanoparticules solubles selon une ou plusieurs des revendications 1 à 5, **caractérisées en ce qu'**elles renferment au moins un polymère porteur de groupes bétaines, qui présente un degré de polymérisation de 50 à 10000, de préférence de 100 à 1000.

7. Nanoparticules solubles selon une ou plusieurs des revendications 1 à 6, **caractérisées en ce qu'**elles renferment un polymère qui comprend, au côté de monomères qui présentent des groupes bétaïnes, également des monomères pris dans le groupe comprenant l'acide acrylique, des esters de l'acide acrylique, des acrylamides, des esters vinyliques d'acides carboxyliques, des éthers vinylalkyliques, la N-vinylpyridine, la N-vinylpyrrolidone, des N-vinylcarboxamides.

8. Procédé pour la préparation de nanoparticules solubles selon une ou plusieurs des revendications 1 à 7, par réaction d'un composé du platine seul ou d'un composé du platine conjointement avec un ou plusieurs composés de métaux pris dans le groupe comprenant le rhodium, le ruthénium et l'iridium, sur un agent réducteur dans l'eau ou dans un solvant, **caractérisé en ce qu'**on met en oeuvre la réduction en présence d'une bétaïne polymère, ou qu'on ajoute la bétaine polymère au sol après l'étape de réduction, mais avant le commencement de l'agglomération, la bétaine polymère étant dégradable par hydrolyse, et on prépare le sol à une température comprise entre 0 et 200°C.

9. Procédé selon la revendication 8, **caractérisé en ce qu'**on purifie le sol par précipitation et/ou concentre par évaporation.

10. Procédé selon la revendication 8 et/ou 9, **caractérisé en ce que** les matières de départ pour la préparation de nanoparticules solubles sont des composés solubles, en particulier des sels hydrosolubles, notamment l'acide hexachloroplatinique(IV) hydraté, l'acide hexachloroiridique hydraté, l'acétylacétonante d'iridium(III), l'acétylacétonante de ruthénium(III), le nitrate de ruthénium(III), le chlorure de rhodium hydraté.

11. Procédé selon une ou plusieurs des revendications 8 à 10, **caractérisé en ce qu'**on emploie les matières de départ pour la préparation de nanoparticules solubles en une concentration d'environ 0,1 à 100 g par litre, de préférence de 1 à 50 g par litre par rapport au solvant.

12. Procédé selon une ou plusieurs des revendications 8 à 11, **caractérisé en ce qu'**on utilise comme agent réducteur l'hydrogène, le borohydrure de sodium, l'éthanol, l'éthylèneglycol ou, de préférence, le sels sodique d'acide hydroxyméthanesulfinique.

13. Procédé selon une ou plusieurs des revendications 8 à 12, **caractérisé en ce qu'**on utilise l'agent réducteur en quantités stoechiométriques par rapport au(x) composé(s) de métal, ou, de préférence, en excès de 10 à 100 %.

14. Procédé selon une ou plusieurs des revendications 8 à 13, **caractérisé en ce que** le solvant est le méthanol, l'éthanol, l'éthylèneglycol, la N-méthylpyrrolidone, le diméthylformamide, le diméthylacétamide ou le tétrahydrofuranne, ou un mélange de ces matières avec l'eau.

15. Procédé selon une ou plusieurs des revendications 8 à 14, **caractérisé en ce qu'**il est mis en oeuvre à une température de 20 à 100°C.

16. Catalyseurs pour piles à combustible à membrane obtenus par mise en contact d'un substrat finement pulvérisé, conducteur, en carbone, noir de carbone ou graphite finement dispersés, avec un sol des nanparticules selon une ou plusieurs des revendications 1 à 7.

17. Catalyseurs selon la revendication 16, **caractérisés en ce qu'**ils sont mis en suspension avec des polymères conducteurs de protons.

18. Utilisation de catalyseurs selon la revendication 16 et/ou 17 dans des piles à combustible à membrane.
